(19) Europäisches Patentamt
European Patent Office
Office européen des brevets

(11) **EP 3 491 408 B1**

(12) **FASCICULE DE BREVET EUROPEEN**

(45) Date de publication et mention de la délivrance du brevet:
**14.07.2021 Bulletin 2021/28**

(51) Int Cl.:
***G01S 3/04*** *(2006.01)*      ***G01S 3/40*** *(2006.01)*
***B64G 3/00*** *(2006.01)*

(21) Numéro de dépôt: **17757800.2**

(22) Date de dépôt: **27.07.2017**

(86) Numéro de dépôt international:
**PCT/FR2017/052112**

(87) Numéro de publication internationale:
**WO 2018/020171 (01.02.2018 Gazette 2018/05)**

(54) **PROCÉDÉ ET SYSTÈME D'ESTIMATION DE LA DIRECTION D'UN SATELLITE EN PHASE DE TRANSFERT D'UNE ORBITE INITIALE VERS UNE ORBITE DE MISSION**

**VERFAHREN UND SYSTEM ZUR SCHÄTZUNG DER RICHTUNG EINES SATELLITEN IN DER TRANSFERPHASE VON EINER ERSTEN UMLAUFBAHN ZU EINER MISSIONSUMLAUFBAHN**

**METHOD AND SYSTEM FOR ESTIMATING THE DIRECTION OF A SATELLITE IN THE TRANSFER PHASE FROM AN INITIAL ORBIT TO A MISSION ORBIT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2016 FR 1657209**

(43) Date de publication de la demande:
**05.06.2019 Bulletin 2019/23**

(73) Titulaire: **Airbus Defence and Space SAS**
**31402 Toulouse Cedex 4 (FR)**

(72) Inventeurs:
• **AYMES, Jean-Marc**
**31402 Toulouse Cedex 04 (FR)**
• **MAZUEL, Sébastien**
**31402 Toulouse Cedex 04 (FR)**
• **POULET, Antoine**
**31402 Toulouse Cedex 04 (FR)**

(74) Mandataire: **Ipside**
**6, Impasse Michel Labrousse**
**31100 Toulouse (FR)**

(56) Documents cités:
EP-A2- 0 460 866          GB-A- 2 159 335
US-A1- 2002 089 449     US-A1- 2016 131 737
US-B1- 6 317 093          US-B1- 6 469 657

• **SUBRAMANIAN B ET AL: "PRECISE ORBIT DETERMINATION DURING TRANSFER ORBIT PHASE OF GSAT-1", JOURNAL OF SPACECRAFT AND ROCKETS, AMERICAN INSTITUTE OF AERONAUTICS AND ASTRONAUTICS,REASTON,VA, US, vol. 41, no. 5, 1 septembre 2004 (2004-09-01), pages 821-830, XP001210183, ISSN: 0022-4650**
• **LUDWIG VAN DER HORST ET AL: "Step Track Unit for Antenna Control", TECHNISCHE MITTEILUNGEN KRUPP, no. 2, 1 septembre 1987 (1987-09-01), pages 1-7, XP055463553,**

**Description**

## DOMAINE TECHNIQUE

La présente invention appartient au domaine de l'observation de satellites en orbite terrestre. La présente invention concerne plus particulièrement un système et un procédé d'estimation d'une direction d'un satellite en phase de transfert depuis une orbite terrestre, dite « orbite initiale », vers une autre orbite terrestre, dite « orbite de mission ». Cette estimation vise par exemple à restituer l'orbite du satellite pendant la phase de transfert.

La présente invention trouve une application particulièrement avantageuse, bien que non limitative, pour la surveillance de la mise à poste de satellites en orbite géostationnaire (« Geostationary Orbit » ou « GEO ») à partir d'une orbite de transfert géostationnaire (« Geostationary Transfer Orbit » ou « GTO »), en particulier lorsque la mise à poste est effectuée par des moyens de propulsion électrique du satellite ou d'un véhicule porteur assurant le transport dudit satellite depuis l'orbite GTO vers l'orbite GEO.

## ÉTAT DE LA TECHNIQUE

Des stations terrestres de télémesure/télécommande (TT&C) sont généralement mises en œuvre pour surveiller la phase de transfert d'un satellite depuis une orbite GTO, sur laquelle ledit satellite a été injecté par un lanceur, vers une orbite GEO.

De telles stations TT&C comportent une antenne très directive afin d'assurer un niveau de réception suffisant pour décoder un signal de télémesure émis par le satellite au cours de la phase de transfert, et mobile afin de suivre le déplacement dudit satellite pendant la phase de transfert. La direction estimée correspond à la direction de pointage de l'antenne qui permet de maximiser la mesure de puissance de réception du signal de télémesure.

L'utilisation de stations TT&C est très coûteuse, de sorte que la durée de location d'une station TT&C doit de préférence être réduite le plus possible.

Toutefois, dans le cas d'une mise à poste en orbite GEO par des moyens de propulsion électrique, la durée de transfert dure entre environ 3 mois (dans le cas d'une mise à poste par des moyens de propulsion mixtes électrique/chimique) et environ 6 mois (dans le cas d'une mise à poste par des moyens de propulsion exclusivement électrique).

Les coûts de location de stations TT&C sur de telles durées (3 à 6 mois) sont prohibitifs. En outre, si la mise à poste en orbite GEO par des moyens de propulsion électrique continue à se développer, les réseaux de stations TT&C actuels seront rapidement dépassés par la demande.

Une alternative consisterait à n'utiliser les stations TT&C pour ne surveiller qu'occasionnellement la phase de transfert du satellite. Dans un tel cas, la trajectoire prévue dudit satellite serait utilisée pour estimer la direction du satellite au moment d'utiliser une station TT&C, afin de diriger l'antenne de ladite station TT&C dans la direction prévue.

Toutefois, si le satellite ne se trouve pas dans la direction prévue, par exemple du fait d'une défaillance des moyens de propulsion électrique, ledit satellite serait perdu et ne pourrait éventuellement être retrouvé qu'en effectuant un balayage de l'espace au moyen d'une ou de plusieurs stations TT&C. Du fait de la très forte directivité de l'antenne d'une station TT&C, un tel balayage s'avérerait cependant long et coûteux.

SUBRAMANIAN B ET AL: "PRECISE ORBIT DETERMINATION DURING TRANSFER ORBIT PHASE OF GSAT-1", JOURNAL OF SPACECRAFT AND ROCKETS, AMERICAN INSTITUTE OF AERONAUTICS AND ASTRONAUTICS, décrit un procédé d'estimation d'une direction d'un satellite au cours d'une phase de transfert vers un orbite géostationnaire. LUDWIG VAN DER HORST ET AL: "Step Tracking Unit for Antenna Control", TECHNISCHE MITTEILUNGEN KRUPP, décrit un procédé d'estimation d'une direction d'un satellite comportant une phase de recherche en spirale et une phase de suivi.

Afin de remédier à ces inconvénients, il pourrait être envisagé d'utiliser des systèmes équipés d'antennes moins directives que celles des stations TT&C conventionnelles. Toutefois, le signal de télémesure émis par le satellite serait alors reçu avec un niveau de puissance très en dessous du plancher de bruit. En outre, les antennes utilisées étant moins directives, de tels systèmes seraient plus sensibles à la présence d'interférences ayant des directions d'arrivée proches de celle du signal de télémesure dudit satellite considéré.

## EXPOSÉ DE L'INVENTION

La présente invention a pour objectif de remédier à tout ou partie des limitations des solutions de l'art antérieur, notamment celles exposées ci-avant, en proposant une solution qui permette d'estimer la direction d'un satellite en phase de transfert avec des antennes moins directives que celles des stations TT&C conventionnelles.

A cet effet, et selon un premier aspect, l'invention concerne un procédé d'estimation d'une direction d'un satellite au cours d'une phase de transfert dudit satellite depuis une orbite terrestre, dite « orbite initiale », vers une autre orbite terrestre, dite « orbite de mission », ladite direction dudit satellite étant estimée par rapport à une antenne de mesure en exécutant une pluralité d'étapes de mesure de puissance de réception, par ladite antenne de mesure, d'un signal cible émis par ledit satellite, pour différentes directions de pointage de ladite antenne de mesure, la direction estimée dudit satellite correspondant à une direction de pointage permettant de maximiser la mesure de puissance. Selon l'invention, le signal cible comportant une composante sensiblement sinusoïdale, dite « composante mono-fréquence », chaque étape de mesure de puissance comporte une transposition dans le domaine fréquentiel d'un signal numérique, obtenu à partir d'un signal fourni par l'antenne de mesure, de sorte à obtenir un spectre fréquentiel dudit signal numérique sur une bande fréquentielle prédéterminée comportant la composante mono-fréquence, dite « bande de mesure », et la mesure de puissance pour la direction de pointage considérée est déterminée à partir d'une valeur maximale du spectre fréquentiel.

Ainsi, la direction du satellite est estimée en maximisant la mesure de puissance de réception d'un signal cible émis par le satellite, par exemple le signal de télémesure dudit satellite. Toutefois, la mesure de puissance est effectuée dans le domaine fréquentiel, ce qui présente plusieurs avantages.

D'une part, l'acquisition du signal numérique sur une durée assez importante, puis son traitement dans le domaine fréquentiel revient à réaliser plusieurs corrélations dudit signal numérique avec des signaux sinusoïdaux correspondant aux différentes fréquences discrètes considérées dans le domaine fréquentiel. De telles dispositions introduisent un gain de traitement plus important que dans les stations TT&C conventionnelles, en particulier sur la composante mono-fréquence du signal cible, qui est sensiblement sinusoïdale. Ce gain de traitement plus important permet, dans le cas d'une utilisation d'antennes moins directives que celles des stations TT&C conventionnelles, d'améliorer significativement le rapport signal sur bruit d'un signal cible qui présenterait, en sortie de l'antenne de mesure, un niveau de puissance très inférieur au plancher de bruit.

D'autre part, la transposition dans le domaine fréquentiel permet de supprimer les interférences qui, bien que présentant des directions d'arrivée proches de celle du signal cible émis par le satellite, sont disjointes en fréquences dudit signal cible. Il suffit en effet de considérer une bande de mesure comportant au moins la fréquence de la composante mono-fréquence du signal cible mais pas les fréquences desdites interférences. En se concentrant plus particulièrement sur la composante mono-fréquence, qui est sensiblement sinusoïdale, il est possible d'avoir une sélectivité fréquentielle importante, et donc d'être particulièrement robuste vis-à-vis des interférences.

Le procédé d'estimation de la direction du satellite comporte une phase de recherche et une phase de confirmation :

- la phase de recherche comporte une étape de mesure de puissance de réception pour une direction de pointage à l'intérieur d'un premier cône de balayage prédéterminé autour d'une direction théorique du satellite, et une étape d'évaluation d'un critère prédéterminé de détection en fonction de la mesure de puissance obtenue pour la direction de pointage considérée, lesdites étapes de mesure de puissance et d'évaluation étant répétées pour une autre direction de pointage à l'intérieur du premier cône de balayage tant que le critère de détection n'est pas vérifié,

- la phase de confirmation, exécutée lorsque le critère de détection est vérifié pour une mesure de puissance obtenue pour une direction de pointage, dite « direction de détection », comporte plusieurs étapes de mesure de puissance exécutées pour des directions de pointage respectives différentes à l'intérieur d'un second cône de balayage autour de la direction de détection, la direction estimée du satellite correspondant à la direction de pointage permettant de maximiser la mesure de puissance au cours de ladite phase de confirmation.

Le procédé d'estimation de la direction du satellite comporte après la phase de confirmation, une phase d'actualisation de la direction estimée du satellite, comportant une pluralité d'étapes de mesure de puissance associées respectivement à différentes directions de pointage autour de la direction estimée obtenue au cours de la phase de confirmation, et une étape d'actualisation de ladite direction estimée en fonction desdites mesures de puissance et d'un modèle prédéterminé du diagramme de rayonnement de l'antenne de mesure.

De telles dispositions sont avantageuses en ce qu'elles permettent à la fois de détecter rapidement le satellite tout en ayant une estimation précise de la direction du satellite.

En effet, dans le cas d'une antenne de mesure peu directive (par rapport aux antennes des stations TT&C conventionnelles), on ne sait pas nécessairement, lorsque le signal cible est détecté, si celui-ci a été reçu par le lobe principal du diagramme de rayonnement de l'antenne de mesure, ou par un lobe secondaire dudit diagramme de rayonnement.

La phase de recherche vise à détecter rapidement le signal cible, et prend fin dès que ledit signal cible est détecté. Toutefois, il n'est pas possible de savoir, à l'issue de la phase de recherche, si le signal cible a été reçu dans le lobe principal ou dans un lobe secondaire du diagramme de rayonnement de l'antenne de mesure. La phase de confirmation vise alors à maximiser, autour de la direction de détection, la mesure de puissance de réception du signal cible, et le maximum de la mesure de puissance est nécessairement obtenu lorsque le signal cible est reçu par le lobe principal du diagramme de rayonnement de l'antenne de mesure.

Dans des modes particuliers de mise en œuvre, la phase d'actualisation est répétée au cours du temps, les mesures de puissance effectuées au cours d'une phase d'actualisation étant effectuées pour des directions de pointage autour de la direction estimée obtenue au cours de la phase d'actualisation précédente.

Dans des modes particuliers de mise en œuvre, la bande de mesure considérée au cours d'une étape de mesure de puissance de la phase de confirmation est de largeur différente de celle de la bande de mesure considérée au cours d'une étape de mesure de puissance de la phase d'actualisation.

Dans des modes particuliers de mise en œuvre, au cours de la phase de recherche, les différentes directions de pointage considérées à l'intérieur du premier cône de balayage sont des directions de pointage prédéfinies réparties suivant une spirale centrée sur la direction théorique dudit satellite, lesdites directions de pointage considérées étant balayées successivement en suivant ladite spirale en partant de ladite direction théorique dudit satellite.

Dans des modes particuliers de mise en œuvre, au cours de la phase de confirmation, les différentes directions de pointage considérées à l'intérieur du second cône de balayage sont des directions de pointage prédéfinies réparties suivant une spirale centrée sur la direction de détection dudit satellite, lesdites directions de pointage considérées étant balayées successivement en suivant ladite spirale en partant de ladite direction de détection dudit satellite.

Dans des modes particuliers de mise en oeuvre :

- au cours de la phase de recherche, la direction théorique du satellite est actualisée entre deux étapes successives de mesure de puissance, en fonction d'une trajectoire théorique dudit satellite, et/ou
- au cours de la phase de confirmation, la direction de détection du satellite est actualisée entre deux étapes successives de mesure de puissance, en fonction d'une trajectoire théorique dudit satellite.

Dans des modes particuliers de mise en œuvre, le premier cône de balayage et le second cône de balayage sont de largeurs angulaires respectives supérieures à la largeur angulaire d'un lobe principal d'un diagramme de rayonnement de l'antenne de mesure.

Selon un second aspect, la présente invention concerne un produit programme d'ordinateur comportant un ensemble d'instructions de code de programme, tel qu'il est définis dans la revendication annexée 8.

Selon un troisième aspect, la présente invention concerne un système d'estimation d'une direction d'un satellite au cours d'une phase de transfert dudit satellite depuis une orbite terrestre, dite « orbite initiale », vers une autre orbite terrestre, dite « orbite de mission », tel qu'il est définis dans la revendication annexée 9.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système d'estimation de la direction d'un satellite en phase de transfert,
- Figure 2 : une représentation schématique d'un spectre fréquentiel d'un signal de télémesure émis par un satellite,
- Figure 3 : une représentation schématique de spectres fréquentiels du signal de télémesure illustrant l'utilisation de bandes de mesure de largeurs différentes pour mesurer la puissance de réception dudit signal de télémesure,
- Figure 4 : un diagramme illustrant les principales phases d'un mode de mise en œuvre du procédé d'estimation de la direction du satellite en phase de transfert, qui n'est pas couvert par l'invention revendiquée,
- Figure 5 : une représentation schématique d'un exemple d'une spirale suivie pour balayer différentes directions de pointage d'une antenne de mesure du système d'estimation,
- Figure 6 : un diagramme illustrant les principales phases du procédé d'estimation de la direction du satellite en phase de transfert,
- Figure 7 : une représentation schématique d'exemples de schémas de directions de pointage de l'antenne de mesure pour actualiser la direction estimée du satellite.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

La présente invention concerne un système 10 et un procédé 50 d'estimation de la direction d'un satellite 20 en phase de transfert depuis une orbite terrestre, dite « orbite initiale », vers une autre orbite terrestre, dite « orbite de mission ». Dans la suite de la description, on se place de manière non limitative dans le cas où l'orbite de mission est l'orbite GEO, et où l'orbite initiale est une orbite GTO sur laquelle le satellite 20 est placé en utilisant un moyen de lancement, tel qu'un lanceur conventionnel de la gamme d'Ariane 5.

De manière conventionnelle, la mise à poste en orbite GEO d'un satellite 20 à partir d'une orbite GTO utilise des moyens de propulsion dudit satellite 20 et/ou des moyens de propulsion d'un véhicule porteur assurant le transport dudit satellite sur une partie au moins du trajet entre l'orbite GTO et l'orbite GEO.

L'invention trouve une application particulièrement avantageuse dans le cas d'une utilisation de moyens de propulsion électrique sur tout ou partie du trajet entre l'orbite GTO et l'orbite GEO. En effet, tel qu'indiqué précédemment, la durée du transfert est alors importante (3 à 6 mois), de sorte que la location de stations TT&C pendant toute la durée du transfert représente un coût trop important, et constitue également une utilisation inefficace des stations TT&C.

Rien n'exclut, toutefois, d'utiliser l'invention pour surveiller une phase de transfert d'un satellite utilisant des moyens de propulsion non électrique, en particulier des moyens de propulsion chimique.

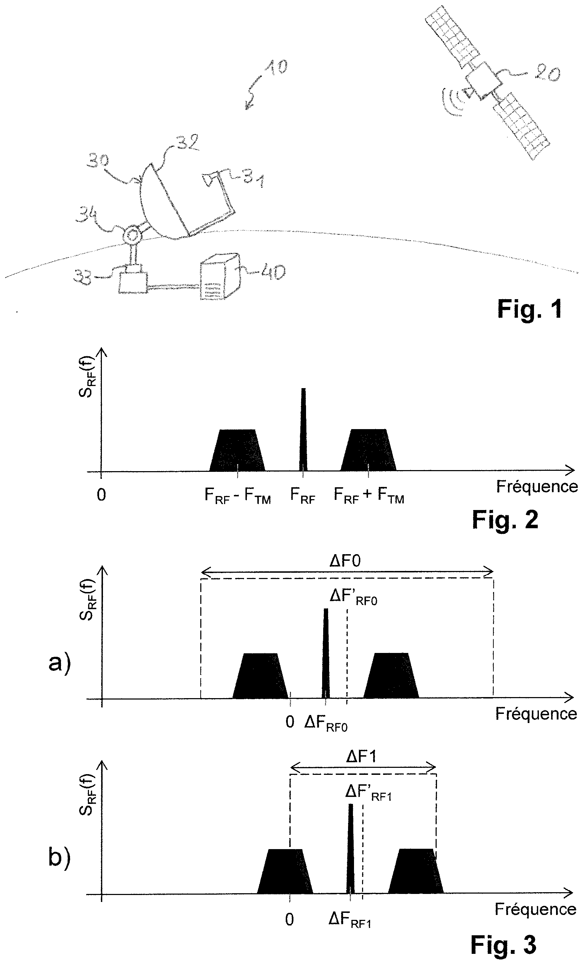

La figure 1 représente de façon schématique un exemple non limitatif de réalisation d'un système 10 d'estimation de la direction d'un satellite 20 en phase de transfert d'une orbite GTO vers l'orbite GEO.

Tel qu'illustré par la figure 1, le système 10 d'estimation comporte une antenne 30 de mesure terrestre. Par « terrestre », on entend à la surface de la Terre, notamment à même le sol, en haut d'un bâtiment, d'un pylône, etc. Le système 10 d'estimation comporte également des moyens de pointage adaptés à modifier une direction de pointage de l'antenne 30 de mesure.

Dans l'exemple non limitatif illustré par la figure 1, l'antenne 30 de mesure est du type comportant une source 31 et un réflecteur 32, et les moyens de pointage correspondent à des moyens mécaniques motorisés, par exemple deux articulations motorisées 33, 34 adaptées à modifier la direction de pointage respectivement en azimut et en élévation.

A un instant donné, le champ de vision instantané couvert par l'antenne 30 de mesure est déterminé principalement par la largeur du lobe principal du diagramme de rayonnement de ladite antenne 30 de mesure. Par « lobe principal », on entend le lobe du diagramme de rayonnement de l'antenne 30 de mesure comportant la direction de pointage, c'est-à-dire la direction de rayonnement pour laquelle le gain maximal $G_{MAX}$ de l'antenne 30 de mesure est obtenu. La largeur angulaire du lobe principal, dans un plan comportant ladite direction de pointage, correspond à la largeur de la plage angulaire continue comportant ladite direction de pointage et les directions de rayonnement présentant un gain égal ou supérieur à ($G_{MAX}$ - 3dB). Par exemple, le gain maximal $G_{MAX}$ de l'antenne 30 de mesure est égal ou supérieur à 15dB/K (décibels par Kelvin).

Dans le cas d'une antenne 30 de mesure comportant une source 31 et un réflecteur 32, la largeur angulaire du lobe principal dépend notamment des dimensions dudit réflecteur 32. Dans des modes préférés de réalisation, les dimensions dudit réflecteur 32 sont inférieures à 5 mètres, voire inférieures à 3 mètres, de sorte que l'antenne 30 de mesure est bien moins directive que les antennes des stations TT&C conventionnelles, qui comportent des réflecteurs dont les dimensions sont généralement supérieures à 20 mètres.

En faisant varier la direction de pointage de l'antenne 30 de mesure, grâce aux articulations motorisées 33, 34, il est possible de couvrir au cours du temps un champ de vision beaucoup plus important que le champ de vision instantané de l'antenne 30 de mesure. Par exemple, l'articulation motorisée 33 permet de faire varier la direction de pointage en azimut de l'antenne 30 de mesure dans un intervalle de ± 110 degrés autour d'une direction de pointage en azimut centrale, et l'articulation motorisée 34 permet de faire varier la direction de pointage en élévation de 10 degrés à 80 degrés par rapport au sol.

Le système 10 d'estimation comporte également un dispositif 40 de traitement, relié à l'antenne 30 de mesure par une chaîne de réception (non représentée sur les figures).

De manière conventionnelle, chaque chaîne de réception comporte par exemple au moins un amplificateur faible bruit (« Low Noise Amplifier » ou LNA), un circuit abaisseur de fréquence et un convertisseur analogique/numérique. La chaîne de réception fournit un signal numérique à partir d'un signal obtenu en sortie de l'antenne 30 de mesure.

Le dispositif 40 de traitement comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé 50 d'estimation de la direction du satellite 20 en phase de transfert. Alternativement ou en complément, le dispositif 40 de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 50 d'estimation.

En d'autres termes, le dispositif 40 de traitement comporte un ensemble de moyens configurés de façon logicielle (produit programme d'ordinateur spécifique) et/ou matérielle (FPGA, PLD, ASIC, composants électroniques discrets, etc.) pour mettre en oeuvre les étapes du procédé 50 d'estimation de la direction du satellite 20 en phase de transfert.

En particulier, un procédé 50 d'estimation de la direction du satellite 20 comporte des étapes, mises en œuvre par le dispositif 40 de traitement, de :

- commande des moyens de pointage de l'antenne 30 de mesure, en l'occurrence les articulations motorisées 33, 34 dans l'exemple illustré par la figure 1, de sorte à faire varier la direction de pointage de ladite antenne 30 de mesure,
- mesure de la puissance de réception d'un signal cible émis par le satellite 20 en fonction du signal numérique obtenu à partir du signal fourni par l'antenne 30 de mesure.

En faisant varier la direction de pointage de l'antenne 30 de mesure et en mesurant, pour chaque direction de pointage considérée, la puissance de réception dudit signal cible, le dispositif 40 de traitement estime la direction dudit satellite 20 en maximisant la mesure de puissance de réception dudit signal cible. Ainsi, la direction estimée du satellite 20 correspond à la direction de pointage maximisant la mesure de puissance de réception du signal cible.

De préférence, le signal cible considéré comporte une composante sensiblement sinusoïdale, dite « composante mono-fréquence ». Le signal cible peut être de tout type adapté, dès lors qu'il comporte une telle composante mono-fréquence.

Notamment, de nombreux satellites actuels émettent, y compris en phase de transfert, un signal de télémesure composé d'un signal en modulation de phase à deux niveaux dite PM/BPSK (« Phase Modulation »/« Binary Phase-Shift Keying »), c'est-à-dire avec un premier niveau de modulation de phase linéaire suivi d'une modulation numérique à deux états de phase. Un tel signal peut s'exprimer sous la forme suivante :

$$s_{RF}(t) = A \cdot \sin(2 \cdot \pi \cdot F_{RF} \cdot t + m_{TM} \cdot d(t) \cdot \sin(2 \cdot \pi \cdot F_{TM} \cdot t))$$

expression dans laquelle :

- $s_{RF}(t)$ correspond au signal de télémesure en fonction du temps,
- A correspond à l'amplitude du signal de télémesure,
- $F_{RF}$ correspond à la fréquence porteuse dudit signal de télémesure,
- $m_{TM}$ correspond à l'indice de modulation,
- $d(t)$ correspond aux données émises dans le signal de télémesure,
- $F_{TM}$ correspond à l'écart fréquentiel entre la fréquence porteuse $F_{RF}$ et les fréquences porteuses modulées par les données $d(t)$.

La figure 2 représente schématiquement les principales composantes du spectre fréquentiel $S_{RF}(f)$ du signal de télémesure. Tel qu'illustré par la figure 2, les principales composantes du spectre fréquentiel $S_{RF}(f)$ du signal de télémesure sont les suivantes :

- une composante mono-fréquence sur la fréquence $F_{RF}$, généralement désignée par « résidu de porteuse » dans le contexte d'un signal de télémesure,
- des composantes qui ne sont pas mono-fréquences, centrées respectivement sur les fréquences ($F_{RF} + F_{TM}$) et ($F_{RF} - F_{TM}$).

Dans la suite de la description, on se place de manière non limitative dans le cas où le signal cible correspond à un signal de télémesure tel que décrit ci-avant, de sorte que la composante mono-fréquence correspond au résidu de porteuse dudit signal de télémesure. Cette composante mono-fréquence est en général celle présentant le meilleur rapport signal à bruit pour des indices de modulation de l'ordre de 1 rad.

Tel qu'indiqué précédemment, la direction du satellite 20 est estimée en maximisant la mesure de puissance de réception du signal de télémesure, de sorte que l'estimation de la direction dudit satellite 20 comporte une pluralité d'étapes de mesure de puissance dudit signal de télémesure pour différentes directions de pointage de l'antenne 30 de mesure. Avantageusement, le dispositif 40 de traitement, pour chaque mesure de puissance :

- effectue une transposition dans le domaine fréquentiel du signal numérique fourni par la chaîne de réception de l'antenne 30 de mesure, de sorte à obtenir un spectre fréquentiel dudit signal numérique sur une bande fréquentielle prédéterminée comportant la fréquence $F_{RF}$ du résidu de porteuse, dite « bande de mesure »,
- détermine la mesure de puissance pour la direction de pointage considérée à partir d'une valeur maximale dudit spectre fréquentiel sur ladite bande de mesure considérée.

Ainsi, si le signal numérique comporte le signal de télémesure émis par le satellite 20 (ce qui sera le cas si l'antenne 30 de mesure est pointée sensiblement en direction du satellite 20), alors la valeur maximale du spectre fréquentiel du signal numérique correspond en principe au résidu de porteuse du signal de télémesure. De préférence, la mesure de puissance du signal de télémesure correspond à la mesure de la puissance de réception uniquement du résidu de porteuse (c'est-à-dire que les autres composantes du signal de télémesure ne sont pas considérées pour la mesure de puissance, de sorte que la mesure de puissance consiste à mesurer la puissance de réception dudit résidu de porteuse).

La transposition dans le domaine fréquentiel peut mettre en œuvre toute méthode connue de l'homme de l'art, par exemple une transformée de Fourier rapide (« Fast Fourier Transform » ou FFT dans la littérature anglo-saxonne). Une telle transposition dans le domaine fréquentiel prend en entrée plusieurs échantillons consécutifs du signal numérique, obtenus pendant une durée d'acquisition prédéterminée. Plus la durée d'acquisition est importante, et plus le gain de traitement introduit sur le résidu de porteuse sera important.

Toutefois, il est également avantageux de ne pas augmenter de manière trop importante cette durée d'acquisition, afin d'éviter d'avoir une résolution fréquentielle trop importante dans le domaine fréquentiel, c'est-à-dire des fréquences discrètes trop resserrées. En effet, cela pourrait conduire à étaler ledit résidu de porteuse sur plusieurs fréquences discrètes, du fait notamment d'un étalement fréquentiel affectant le résidu de porteuse à l'émission dû à un bruit de phase. Dans des modes préférés de mise en œuvre, la durée $\Delta T$ d'acquisition du signal numérique est telle que :

$$\frac{1}{2 \cdot \delta F} \leq \Delta T \leq \frac{1}{\delta F}$$

expression dans laquelle $\delta F$ correspond à la largeur maximale de cet étalement fréquentiel autour de la fréquence porteuse $F_{RF}$. En d'autres termes, $F_{RF}$ étant la fréquence théorique d'émission du résidu de porteuse, le résidu de porteuse est en réalité formé par une composante fréquentielle principale à la fréquence théorique $F_{RF}$, mais également par d'autres composantes fréquentielles comprises principalement à l'intérieur d'une bande fréquentielle $[F_{RF} - \delta F/2 ; F_{RF} + \delta F/2]$. La largeur maximale $\delta F$ de cet étalement fréquentiel est définie comme correspondant à la largeur de la bande fréquentielle dans laquelle les composantes fréquentielles présentent une puissance égale ou supérieure à ($P_{MAX}$ - 5dB), expression dans laquelle $P_{MAX}$ correspond à la puissance de la composante fréquentielle principale à la fréquence théorique $F_{RF}$. En respectant l'expression ci-dessus, le résidu de porteuse sera principalement concentré sur une seule fréquence discrète. De préférence, on utilise la même durée $\Delta T$ d'acquisition pour chaque étape de mesure de puissance. Par exemple, si la largeur maximale $\delta F$ est égale à 1.5 Hertz, alors la durée d'acquisition est par exemple égale à 0.67 secondes.

Les oscillateurs locaux à bord du satellite et au sol doivent donc être dimensionnés pour garantir une stabilité court terme adéquate. En particulier, il est important que le système sol ait la connaissance de la stabilité des oscillateurs locaux à bord du satellite afin de la prendre en compte pour limiter la diffusion de l'énergie du signal en dehors d'un « bin » fréquentiel ($\delta F$) dans le domaine fréquentiel.

Tel qu'indiqué précédemment, l'antenne 30 de mesure est de préférence moins directive que les antennes utilisées dans les stations TT&C conventionnelles. Par exemple, la largeur angulaire du lobe principal du diagramme de rayonnement de l'antenne 30 de mesure est supérieure à 0.5 degrés, voire supérieure à 2 degrés, et ce quel que soit le plan considéré comportant la direction de pointage de l'antenne 30 de mesure. De telles dispositions permettent de détecter plus facilement le satellite 20, dans la mesure où le champ de vision instantané de ladite antenne 30 de mesure est plus important que pour les antennes des stations TT&C conventionnelles. Toutefois, du fait que l'antenne 30 de mesure est moins directive que les antennes des stations TT&C conventionnelles, le gain maximal $G_{MAX}$ sera également inférieur à celui des antennes des stations TT&C conventionnelles. Par contre, la diminution du gain maximal est compensée par une augmentation de la durée $\Delta T$ d'acquisition. Par exemple, si la durée $\Delta T$ d'acquisition est fixée tel que décrit ci-dessus pour concentrer le résidu de porteuse sur une seule fréquence discrète, alors il est possible de choisir un gain maximal $G_{MAX}$ pour l'antenne 30 de mesure pour permettre, compte tenu de la durée $\Delta T$ d'acquisition sélectionnée et du gain de traitement associé, de détecter le résidu de porteuse du signal de télémesure.

Du fait que l'antenne 30 de mesure est moins directive que les antennes des stations TT&C conventionnelles, elle est également plus sensible à la présence d'interférences ayant des directions d'arrivée proches de celle du signal de télémesure émis par le satellite 20.

Toutefois, du fait que la mesure de puissance est réalisée dans le domaine fréquentiel, et principalement sur le résidu de porteuse qui occupe une largeur fréquentielle très étroite, de préférence concentrée sur une seule fréquence discrète, il est aisé de choisir une bande de mesure adaptée à supprimer les interférences.

Dans des modes préférés de mise en œuvre, la largeur de la bande de mesure peut prendre plusieurs valeurs différentes au cours de l'estimation de la direction du satellite 20, par exemple pour ajuster ladite largeur à l'incertitude sur la fréquence du résidu de porteuse.

La figure 3 représente schématiquement un exemple non limitatif d'utilisation de différentes largeurs pour la bande de mesure utilisée pour mesurer la puissance de réception du résidu de porteuse du signal de télémesure du satellite 20.

Le circuit abaisseur de fréquence de la chaîne de réception est par exemple configuré pour ramener la fréquence

$F_{RF}$ sur une fréquence intermédiaire, pouvant être nulle, en appliquant une translation fréquentielle prédéterminée. Dans la suite de la description, on se place de manière non limitative dans le cas où la fréquence $F_{RF}$ est ramenée sur la fréquence nulle (bande de base). Par conséquent, en théorie, le résidu de porteuse du signal de télémesure est, dans le spectre fréquentiel du signal numérique, ramené sur la fréquence nulle.

La partie a) de la figure 3 représente le spectre fréquentiel du signal numérique, obtenu au cours d'une étape initiale de mesure de puissance du résidu de porteuse. Tel qu'illustré par la partie a) de la figure 3, le spectre fréquentiel du signal numérique comporte un signal de télémesure. Toutefois, du fait par exemple de la dérive fréquentielle affectant le signal de télémesure à l'émission et/ou du fait d'un décalage Doppler introduit après l'émission par le déplacement du satellite 20 par rapport à l'antenne 30 de mesure, le signal de télémesure est reçu par l'antenne 30 de mesure sur une fréquence $F_{RF0}$ différente de la fréquence théorique $F_{RF}$, égale à $F_{RF} + \Delta F_{RF0}$. Ainsi, le résidu de porteuse est reçu, en bande de base, sur la fréquence $AF_{RF0}$.

Par conséquent, pour assurer la détection initiale du signal de télémesure, et plus particulièrement de son résidu de porteuse, il est préférable de considérer une largeur $\Delta F0$ importante pour la bande de mesure.

La bande de mesure est par exemple centrée sur la fréquence théorique $F_{RF}$ du résidu de porteuse. Dans une variante préférée, le procédé 50 d'estimation de la direction du satellite 20 comporte l'estimation de la fréquence du résidu de porteuse, et la bande de mesure est avantageusement centrée sur ladite fréquence estimée du résidu de porteuse. La fréquence du résidu de porteuse est par exemple estimée en fonction de la fréquence théorique $F_{RF}$, connue a priori, et de la trajectoire théorique dudit satellite 20, qui permet d'estimer le décalage Doppler. Dans l'exemple illustré par la partie a) de la figure 3, le décalage Doppler estimé est égal à $\Delta F'_{RF0}$, de sorte que la fréquence estimée du résidu de porteuse est égale à $F'_{RF0} = F_{RF} + \Delta F'_{RF0}$, et est différente de la fréquence $F_{RF0}$ du résidu de porteuse, par exemple du fait de la dérive fréquentielle introduite à l'émission.

Tel qu'illustré par la partie a), la bande de mesure, de largeur $\Delta F0$ et centrée sur la fréquence $\Delta F'_{RF0}$ estimée du résidu de porteuse, comporte bien la fréquence $\Delta F_{RF0}$ réelle du résidu de porteuse. Le spectre fréquentiel du signal numérique atteint, au niveau de ladite fréquence $\Delta F_{RF0}$, une valeur maximale qui permet de détecter ledit résidu de porteuse. La valeur maximale obtenue permet d'estimer la puissance du résidu de porteuse. En outre, la fréquence discrète pour laquelle la valeur maximale est obtenue donne une estimation de la fréquence $\Delta F_{RF0}$ réelle du résidu de porteuse.

La partie b) de la figure 3 représente le spectre fréquentiel du signal numérique, obtenu au cours d'une étape ultérieure de mesure de puissance du résidu de porteuse. Tel qu'illustré par la partie b) de la figure 3, le signal de télémesure est reçu sur une fréquence $F_{RF1}$ différente de la fréquence théorique $F_{RF}$, égale à $F_{RF} + \Delta F_{RF1}$. Ainsi, le résidu de porteuse est reçu, en bande de base, sur la fréquence $\Delta F_{RF1}$.

De préférence, la fréquence du résidu de porteuse est estimée à partir de la fréquence $\Delta F_{RF0}$ estimée au cours de l'étape de mesure de puissance précédente, en tenant compte de la trajectoire théorique du satellite 20. De la sorte, l'impact de la dérive fréquentielle à l'émission est réduit et la précision de l'estimation du décalage Doppler est améliorée. Il en résulte que l'incertitude sur la fréquence $\Delta F_{RF1}$ réelle du résidu de porteuse est diminuée par rapport à l'étape de mesure de puissance précédente, de sorte que l'estimation $\Delta F'_{RF1}$ de la fréquence $\Delta F_{RF1}$ réelle est plus précise qu'au cours de l'étape de mesure de puissance précédente. Pour cette raison, notamment, il peut être possible de considérer une largeur $\Delta F1$ de la bande de mesure inférieure à la largeur $\Delta F0$ considérée au cours de l'étape de mesure de puissance précédente, améliorant ainsi la suppression d'éventuelles interférences.

Dans des modes préférés de mise en œuvre, la largeur $\Delta F1$ est déterminée en fonction du temps écoulé depuis l'étape de mesure de puissance précédente, et diminue avec celui-ci (en d'autres termes, plus le temps écoulé depuis l'étape de mesure de puissance précédente est faible et plus la largeur de la bande de mesure considérée est faible). De telles dispositions permettent d'adapter la largeur de la bande de mesure à l'incertitude sur la fréquence réelle du résidu de porteuse, puisque cette incertitude est d'autant plus faible que ledit temps écoulé est faible. Par exemple, la largeur $\Delta F1$ de la bande de mesure considérée est proportionnelle au temps écoulé, et est par exemple déterminée selon l'expression $\Delta F1 = K \cdot \delta T$ Hertz, expression dans laquelle $\delta T$ correspond au temps écoulé entre les deux étapes de mesure de puissance considérées et K correspond au coefficient de proportionnalité (K est par exemple égal à 50 Hertz/seconde).

Tel qu'illustré par la partie b), la bande de mesure, de largeur $\Delta F1$ et centrée sur la fréquence $\Delta F'_{RF1}$ estimée du résidu de porteuse, comporte bien la fréquence $\Delta F_{RF1}$ réelle du résidu de porteuse. Le spectre fréquentiel du signal numérique atteint, au niveau de ladite fréquence $\Delta F_{RF1}$, une valeur maximale qui permet de détecter ledit résidu de porteuse. La valeur maximale obtenue permet d'estimer la puissance du résidu de porteuse. En outre, la fréquence discrète pour laquelle la valeur maximale est obtenue donne une estimation de la fréquence $\Delta F_{RF1}$ réelle du résidu de porteuse.

Ainsi, dans des modes particuliers de mise en œuvre, il est possible de modifier différents paramètres de la bande de mesure considérée d'une étape de mesure de puissance à une autre, en particulier :

- la fréquence centrale de ladite bande de mesure,

- la largeur de ladite bande de mesure.

Par exemple, le signal numérique est obtenu sur une bande fréquentielle prédéfinie, dite « bande d'acquisition », qui est invariante au cours du temps, et chaque bande de mesure considérée est une sous-bande fréquentielle de ladite bande d'acquisition.

De telles dispositions permettent de réduire la complexité de la chaîne de réception, qui n'a pas à gérer les différentes largeurs possibles pour la bande de mesure et les différentes fréquences centrales possibles pour ladite bande de mesure. La largeur de la bande d'acquisition est choisie, en fonction de l'excursion maximale attendue pour la fréquence du résidu de porteuse (par décalage Doppler, du fait de la dérive fréquentielle introduite à l'émission, etc.), de sorte à assurer que le résidu de porteuse est toujours inclus dans ladite bande d'acquisition. De préférence, la fréquence nulle, sur laquelle est centrée ladite bande d'acquisition, correspond à la fréquence $F_{RF}$ théorique du résidu de porteuse. Par exemple, la bande d'acquisition est de largeur 300 kilohertz, et la largeur $\Delta F0$ de la bande de mesure considérée au cours de la détection initiale est par exemple égale à 100 kilohertz.

L'étalement fréquentiel peut également être provoqué par l'effet Doppler : si la vitesse radiale du satellite par rapport à l'antenne de mesure subit une variation significative pendant la durée d'acquisition, c'est-à-dire en cas d'accélération radiale notable, la fréquence du signal cible varie pendant la mesure. Afin de limiter les conséquences de ce phénomène (réduction du rapport signal à bruit notamment), l'invention met en œuvre de manière optionnelle, avant la phase d'analyse spectrale (elle-même suivie de la phase de détection et de mesure de puissance), une étape de pré-compensation du signal numérique à l'aide d'un ensemble d'hypothèses de valeurs de pente Doppler. Ainsi, pour la valeur testée la plus proche de la valeur réelle de variation Doppler, l'effet d'étalement est majoritairement contrebalancé et ses conséquences néfastes annulées.

La réalisation de cette étape peut s'effectuer soit simultanément soit successivement sur les différentes hypothèses de pente.

Lorsque l'étape est réalisée simultanément sur toutes les hypothèses de pente, alors on réplique tout d'abord le signal numérique autant de fois que d'hypothèses. Ensuite on va appliquer sur chaque copie du signal numérique une pré-compensation différente. Enfin, l'hypothèse la plus réaliste de pente sera celle qui maximise la puissance du signal détecté.

Lorsque l'étape est réalisée successivement sur toutes les hypothèses de pente alors on applique sur une copie temporaire du signal numérique une pré-compensation correspondant à la valeur de pente à tester. Ensuite, on mesure le niveau de signal correspondant et on le compare au dernier niveau le plus élevé détecté pour les autres hypothèses. Si l'hypothèse de pente en cours est la plus élevée alors on stocke son indice. Lorsque toutes les hypothèses de pente ont été testées, il suffit de regarder l'indice stocké pour trouver l'hypothèse la plus réaliste.

Afin d'être plus précis sur l'estimation de la valeur de pente réelle, il est également possible d'envisager de faire varier les valeurs des hypothèses au cours de cette étape de pré-compensation ou de rejouer plusieurs fois l'étape de pré-compensation avec des valeurs de plus en plus resserrées autour de la valeur réelle de pente. En effet, lorsqu'on détecte un pic de puissance, on peut supposer que la valeur réelle de pente se situe autour de cette plage.

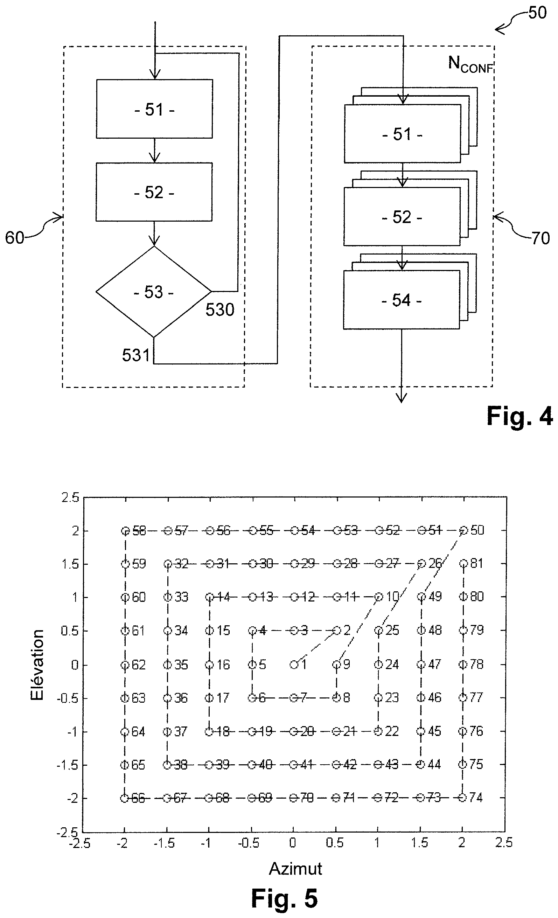

La figure 4 représente les principales phases d'un mode de mise en œuvre du procédé 50 d'estimation de la direction du satellite 20, qui n'est pas couvert par l'invention revendiquée.

Tel qu'illustré par la figure 4, le procédé 50 d'estimation de la direction du satellite 20 comporte, dans le mode de mise en œuvre considéré, une phase 60 de recherche et une phase 70 de confirmation.

La phase 60 de recherche comporte une étape 51 de commande, par le dispositif 40 de traitement, des moyens de pointage de l'antenne 30 de mesure pour diriger l'antenne 30 de mesure dans une direction de pointage à l'intérieur d'un premier cône de balayage prédéterminé autour d'une direction théorique du satellite 20, et une étape 52 de mesure de la puissance pour la direction de pointage considérée. La direction théorique du satellite est par exemple obtenue, de manière conventionnelle, à partir de la trajectoire théorique attendue dudit satellite 20.

La phase 60 de recherche comporte également une étape 53 d'évaluation d'un critère prédéterminé de détection en fonction de la mesure de puissance obtenue pour la direction de pointage considérée. Par exemple, le critère de détection est vérifié lorsque la mesure de puissance est supérieure à une valeur seuil prédéterminée.

Tant que le critère de détection n'est pas vérifié (référence 530 sur la figure 4), lesdites étapes 51 de commande des moyens de pointage, 52 de mesure de puissance et 53 d'évaluation sont répétées pour une autre direction de pointage à l'intérieur du premier cône de balayage.

Dès que le critère de détection est vérifié (référence 531 sur la figure 4), la phase 60 de recherche s'arrête. La direction de pointage pour laquelle la mesure de puissance a permis de vérifier le critère de détection est désignée ci-après par « direction de détection ».

Le premier cône de balayage, comportant les directions de pointage, autour de la direction théorique du satellite 20, qui sont susceptibles d'être considérées au cours de la phase 60 de recherche, est de préférence de largeur angulaire (respectivement en azimut et en élévation) supérieure à la largeur angulaire (respectivement en azimut et en élévation) du lobe principal de rayonnement de l'antenne 30 de mesure. Ainsi, le signal de télémesure du satellite 20 pourra être

9

détecté même si la direction théorique dudit satellite 20 n'est pas très précise.

Dans des modes préférés de mise en œuvre, au cours de la phase 60 de recherche, les différentes directions de pointage considérées à l'intérieur du premier cône de balayage sont des directions de pointage prédéfinies réparties suivant une spirale centrée sur la direction théorique dudit satellite, lesdites directions de pointage considérées étant balayées successivement en suivant ladite spirale en partant de ladite direction théorique dudit satellite.

La figure 5 représente schématiquement un exemple de spirale pouvant être mise en œuvre au cours de la phase 60 de recherche.

Dans l'exemple non limitatif illustré par la figure 5, la spirale est rectangulaire et comporte 81 directions de pointage possibles autour de la direction théorique du satellite 20. Les 81 directions de pointage possibles sont balayées successivement de la direction de pointage « 1 » vers la direction de pointage « 81 », en maintenant le premier cône de balayage centré sur la direction théorique du satellite 20, c'est-à-dire de telle sorte que la direction de pointage « 1 » est alignée avec ladite direction théorique dudit satellite 20.

Sur la figure 5 :

- les abscisses correspondent à l'angle d'azimut autour de la direction théorique dudit satellite 20, normalisé de telle sorte que la valeur « 1 » correspond à la largeur angulaire en azimut du lobe principal de l'antenne 30 de mesure,
- les ordonnées correspondent à l'angle d'élévation autour de ladite direction théorique dudit satellite 20, normalisé de telle sorte que la valeur « 1 » correspond à la largeur angulaire en élévation du lobe principal de l'antenne 30 de mesure.

Dans la suite de la description, on se place de manière non limitative dans le cas où le lobe principal du diagramme de rayonnement de l'antenne 30 de mesure présente la même largeur angulaire en azimut et en élévation, et la largeur angulaire dudit lobe principal est désignée ci-après par $\Delta\theta_{3dB}$.

Tel qu'illustré par la figure 5, la largeur angulaire du premier cône de balayage est par exemple égale à $4 \cdot \Delta\theta_{3dB}$ (soit $\pm 2 \cdot \Delta\theta_{3dB}$), ce qui permet en principe de retrouver le satellite 20 même si la direction théorique est peu précise. L'écart angulaire entre deux directions de pointage successives de la spirale est par exemple égal à $\Delta\theta_{3dB}/2$, ce qui permet à la fois de limiter le nombre maximal de directions de pointage à balayer à l'intérieur du premier cône de balayage tout en assurant que le satellite 20 pourra bien être détecté.

L'utilisation d'une spirale présente divers avantages :

- permet d'avoir une bonne densité spatiale de directions de pointage possibles à l'intérieur du premier cône de pointage et de détecter le signal de télémesure en une seule spirale,
- permet d'avoir une bonne robustesse aux erreurs sur les directions de pointage dans la mesure où l'on passe plusieurs fois à proximité d'une même direction de pointage,
- le balayage depuis le centre du premier cône de balayage vers la limite de celui-ci permet en principe de détecter plus rapidement le signal de télémesure lorsque la direction théorique n'est pas trop imprécise.

Dans l'exemple illustré par la figure 5, la spirale considérée est carrée. De telles dispositions sont avantageuses en ce que, entre deux étapes de mesure, il est possible de ne modifier la direction de pointage de l'antenne 30 de mesure que suivant une dimension, azimut ou élévation, si toutefois le déplacement du satellite 20 entre deux étapes 52 de mesure de puissance peut être négligé.

Toutefois, dans des modes préférés de mise en œuvre, la direction théorique du satellite 20, sur laquelle est centré le premier cône de balayage (direction de pointage « 1 » alignée avec ladite direction théorique), est avantageusement actualisée, en fonction de la trajectoire théorique dudit satellite 20, pour tenir compte du déplacement théorique dudit satellite 20 entre deux étapes 52 de mesure de puissance.

La phase 70 de confirmation est exécutée lorsque le critère de détection est vérifié au cours de la phase 60 de recherche.

La phase 70 de confirmation comporte une étape 51 de commande, par le dispositif 40 de traitement, des moyens de pointage de l'antenne 30 de mesure pour diriger l'antenne 30 de mesure dans une direction de pointage à l'intérieur d'un second cône de balayage prédéterminé autour de la direction de pointage déterminée au cours de la phase 60 de recherche, et une étape 52 de mesure de puissance pour la direction de pointage considérée.

Contrairement à la phase 60 de recherche, l'étape 51 de commande et l'étape 52 de mesure de puissance sont, au cours de la phase 70 de confirmation, exécutées un nombre $N_{CONF}$ prédéterminé de fois de sorte à obtenir $N_{CONF}$ mesures de puissance associées respectivement à différentes directions de pointage à l'intérieur du second cône de balayage.

La phase 70 de confirmation comporte également une étape 54 d'estimation de la direction du satellite 20 en fonction des différentes mesures de puissance obtenues, la direction estimée dudit satellite 20 correspondant à la direction de pointage permettant de maximiser la mesure de puissance au cours de ladite phase 70 de confirmation.

Le second cône de balayage, comportant les directions de pointage, autour de la direction de détection du satellite 20, qui sont susceptibles d'être considérées au cours de la phase 70 de confirmation, est de préférence de largeur angulaire supérieure à la largeur angulaire du lobe principal du diagramme de rayonnement de l'antenne 30 de mesure. Ainsi, le signal de télémesure du satellite 20 pourra être détecté même si la direction de détection dudit satellite 20 n'est pas très précise, et en particulier même si le signal de télémesure dudit satellite 20 a été reçu, au cours de la phase 60 de recherche, par l'intermédiaire d'un lobe secondaire de l'antenne 30 de mesure.

Dans des modes préférés de mise en œuvre, au cours de la phase 70 de confirmation, les différentes directions de pointage considérées à l'intérieur du second cône de balayage sont des directions de pointage prédéfinies réparties suivant une spirale centrée sur la direction de détection dudit satellite, lesdites directions de pointage considérées étant balayées successivement en suivant ladite spirale en partant de ladite direction de détection dudit satellite.

Tout ce qui a été décrit précédemment, en référence à la spirale pouvant être mise en œuvre au cours de la phase 60 de recherche, en particulier ce qui a été décrit en référence à la figure 5, est également applicable pour la spirale pouvant être mise en œuvre au cours de la phase 70 de confirmation, la direction théorique du satellite 20 considérée au cours de la phase 70 de confirmation correspondant à la direction de détection obtenue au cours de la phase 60 de recherche.

Concernant plus particulièrement la spirale décrite en référence à la figure 5, il est à noter que les 81 directions de pointage sont toutes balayées successivement au cours de la phase 70 de confirmation. Comme indiqué précédemment, il est également possible, au cours de la phase 70 de confirmation, d'actualiser la direction de détection du satellite 20, en fonction de la trajectoire théorique dudit satellite 20, pour tenir compte du déplacement théorique dudit satellite 20 entre deux étapes 52 de mesure de puissance.

Il est à noter que la spirale considérée au cours de la phase 70 de confirmation n'est pas nécessairement identique à la spirale considérée au cours de la phase 60 de recherche.

Notamment, il est possible de considérer des largeurs angulaires différentes pour le premier cône de balayage et le second cône de balayage, et/ou des écarts angulaires entre deux directions de pointage successives différents pour le premier cône de balayage et le second cône de balayage et/ou des nombres de directions de pointage différents à l'intérieur du premier cône de balayage et du second cône de balayage.

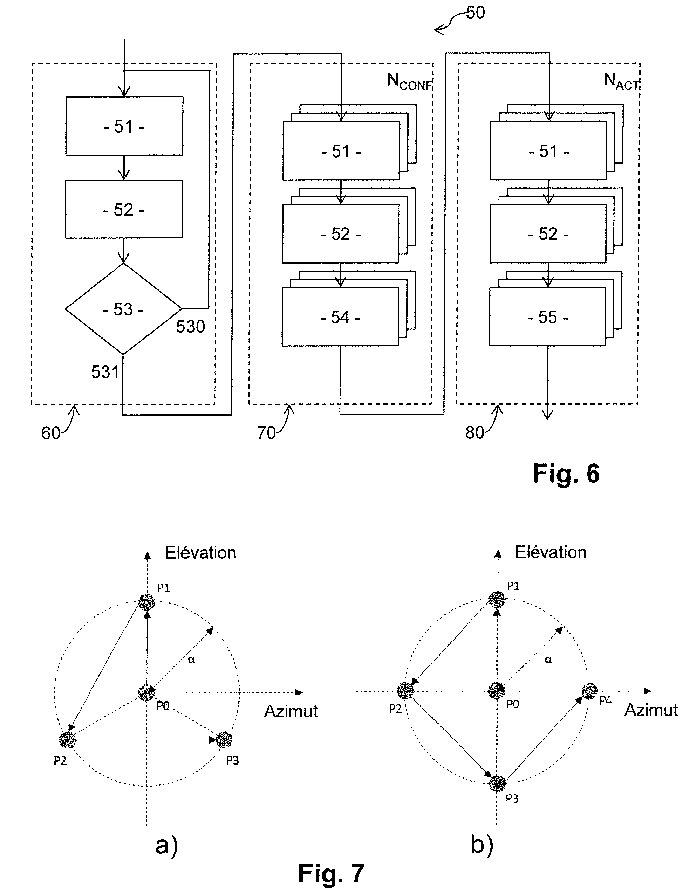

La figure 6 représente schématiquement le mise en œuvre du procédé 50 d'estimation de la direction du satellite en phase de transfert selon la présente invention, dans laquelle ledit procédé 50 d'estimation comporte en outre une phase 80 d'actualisation de la direction estimée du satellite 20.

La phase 80 d'actualisation comporte une étape 51 de commande, par le dispositif 40 de traitement, des moyens de pointage de l'antenne 30 de mesure et une étape 52 de mesure de puissance.

L'étape 51 de commande et l'étape 52 de mesure de puissance sont, au cours de la phase 80 d'actualisation, exécutées un nombre $N_{ACT}$ prédéterminé de fois de sorte à obtenir $N_{ACT}$ mesures de puissance associées respectivement à différentes directions de pointage autour de la direction estimée du satellite 20 obtenue au cours de la phase 70 de confirmation.

La phase 80 d'actualisation comporte également une étape 55 d'actualisation de ladite direction estimée en fonction desdites mesures de puissance et d'un modèle prédéterminé du diagramme de rayonnement de l'antenne 30 de mesure.

En effet, la précision de la direction estimée au cours de la phase 70 de confirmation est en pratique limitée par l'écart angulaire entre deux directions de pointage adjacentes. La phase 80 d'actualisation vise donc à améliorer la précision de la direction estimée.

A cet effet, des mesures de puissance sont effectuées pour un nombre $N_{ACT}$ de directions de pointage différentes autour de la direction estimée au cours de la phase 70 de confirmation. La puissance d'émission du signal de télémesure et les pertes de propagation pouvant être considérées comme constantes sur la durée de la phase 80 d'actualisation, les différences entre les $N_{ACT}$ mesures de puissance dépendent essentiellement :

- du diagramme de rayonnement de l'antenne 30 de mesure,
- des $N_{ACT}$ directions de pointage considérées,
- de la direction réelle du satellite 20.

Ainsi, la direction estimée dudit satellite 20 peut être actualisée comme étant la direction la plus probable, par exemple au sens des moindres carrés, compte tenu des $N_{ACT}$ directions de pointage considérées, des mesures de puissance associées et du diagramme de rayonnement de l'antenne 30 de mesure, qui peut être préalablement obtenu par exemple par calibration.

La figure 7 représente schématiquement des exemples de directions de pointage pouvant être considérées autour de la direction estimée au cours de la phase 70 de confirmation.

Plus particulièrement, la partie a) représente un schéma comportant 4 ($N_{ACT}$ = 4) directions de pointage. Outre la direction estimée au cours de la phase 70 de confirmation (référence PO sur la partie a) de la figure 7), le schéma comporte 3 directions de pointage P1 à P3 réparties de manière uniforme autour de la direction estimée P0, espacées de ladite direction estimée PO par un écart angulaire $\alpha$ qui est par exemple égal à $\Delta\theta_{3dB}/2$.

La partie b) de la figure 7 représente un schéma comportant 5 ($N_{ACT}$ = 5) directions de pointage. Outre la direction estimée au cours de la phase 70 de confirmation (référence PO sur la partie b) de la figure 7), le schéma comporte 4 directions de pointage P1 à P4 réparties de manière uniforme autour de la direction estimée P0, espacées de ladite direction estimée PO par un écart angulaire $\alpha$ qui est par exemple égal à $\Delta\theta_{3dB}/2$.

Comme indiqué précédemment pour la phase 60 de recherche et la phase 70 de confirmation, il est possible, au cours de la phase 80 d'actualisation, d'actualiser la direction estimée PO du satellite 20 en fonction de la trajectoire théorique dudit satellite 20, pour tenir compte du déplacement théorique dudit satellite 20 entre deux étapes 52 de mesure de puissance.

Avantageusement, la phase 80 d'actualisation peut, dans des modes particuliers de mise en œuvre, être répétée au cours du temps. Le cas échéant, les mesures de puissance effectuées au cours d'une phase 80 d'actualisation sont effectuées pour des directions de pointage autour de la direction estimée obtenue au cours de la phase 80 d'actualisation précédente.

Dans le cas où la largeur de la bande de mesure peut varier au cours de l'estimation de la direction du satellite 20, alors il est avantageux, pour les raisons indiquées précédemment, de considérer par exemple :

- au cours de la phase 60 de recherche et de la phase 70 de confirmation : une même largeur $\Delta F0$ de la bande de mesure pour toutes les mesures de puissance,
- au cours de la phase 80 d'actualisation : une largeur $\Delta F1$ qui peut être inférieure à la largeur $\Delta F0$ et la même pour toutes les mesures de puissance, ou varier d'une mesure de puissance à une autre, par exemple en fonction du temps écoulé entre lesdites mesures de puissance.

Dans des modes particuliers de mise en œuvre, le procédé 50 d'estimation comporte une étape préalable de calibration (non représentée sur les figures) de l'antenne 30 de mesure.

Au cours de cette étape de calibration, on exécute la phase 60 de recherche, la phase 70 de confirmation et, le cas échéant, la phase 80 d'actualisation, en cherchant à estimer les directions de satellites de référence dont les positions réelles, et donc les directions réelles par rapport à l'antenne 30 de mesure, sont connues a priori. Les satellites de référence sont par exemple des satellites à poste en orbite GEO.

En comparant les directions estimées des satellites de référence à leurs directions réelles, il est possible d'en déduire des erreurs de pointage de l'antenne 30 de mesure. Les erreurs de pointage ainsi déterminées peuvent ensuite être utilisées pour corriger la direction estimée pour un satellite 20 en phase de transfert.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant une antenne 30 de mesure du type comportant une source 31 et un réflecteur 32, et des moyens de pointage mécaniques motorisés. Rien n'exclut cependant, suivant d'autres exemples, de considérer d'autres types d'antenne 30 de mesure et/ou de moyens de pointage. Par exemple, il est possible de considérer une antenne 30 de mesure se présentant sous la forme d'une antenne réseau constituée d'une pluralité d'antennes élémentaires (antennes cornet, antennes patch, etc.), les moyens de pointage comportant alors un réseau de formation de faisceaux. Le réseau de formation de faisceaux est :

- analogique, auquel cas un seul signal numérique, correspondant au faisceau formé, est fourni en entrée du dispositif 40 de traitement, ou
- numérique, auquel cas plusieurs signaux numériques sont fournis en entrée dudit dispositif 40 de traitement, associés respectivement aux différentes antennes élémentaires, ledit dispositif 40 de traitement formant, à partir desdits signaux numériques, les faisceaux associés aux directions de pointage considérées.

En outre, l'invention a été décrite en considérant notamment une estimation de la fréquence du résidu de porteuse en combinaison avec une largeur variable de la bande de mesure considérée. Toutefois, il est également possible d'estimer la fréquence du résidu de porteuse, pour recentrer la bande de mesure sur la fréquence estimée, lorsque la largeur de la bande de mesure est la même pour toutes les mesures de puissance. Il est également possible de ne pas estimer la fréquence du résidu de porteuse, la bande de mesure étant alors centrée sur la fréquence théorique dudit résidu de porteuse.

De plus, l'invention a été décrite, dans le cas où le procédé 50 d'estimation comporte une phase 60 de recherche et une phase 70 de confirmation, en considérant principalement un balayage en spirale à l'intérieur du premier cône de balayage et/ou du second cône de balayage. Rien n'exclut cependant, suivant d'autres exemples, de considérer d'autres schémas de balayage des différentes directions de pointage. Notamment, il est possible, suivant d'autres exemples, de sélectionner de manière aléatoire la direction de pointage à considérer avant chaque mesure de puissance, ou bien d'utiliser un balayage en ellipse, etc.

Dans des modes particuliers de mise en œuvre de l'invention, l'antenne de mesure du signal cible dispose de deux accès radiofréquences permettant de recevoir ce signal cible suivant deux polarisations orthogonales. Ce type d'implémentation est à relier au fait qu'afin de garantir la réception du signal cible quelle que soit l'attitude de ce dernier par rapport à l'antenne de mesure, il est nécessaire d'émettre le signal cible via deux antennes installées de façon à être approximativement diamétralement opposées. Ainsi, chacune disposant d'un diagramme d'émission semi-hémisphérique, la couverture totale des deux antennes est globale. De plus, afin d'éviter des phénomènes d'évanouissement du signal combiné des deux antennes, chaque antenne émet le signal cible suivant une polarisation orthogonale à l'autre. Le signal cible est donc reçu sur l'une des voies de réception ou sur l'autre en fonction des phases de vol. Dans cette configuration, les phases de recherche de la position du satellite et de poursuite de ce dernier par évaluation du maximum de puissance reçu doivent donc prendre en compte cette dualité de polarisation. Ainsi, pour garantir un cycle de « steptrack » pertinent, les mesures de puissance utilisées pour déterminer la nouvelle direction à pointer sont toutes issues de la même polarisation, celle-ci étant déterminée comme étant celle qui a donné le meilleur rapport signal à bruit sur la première mesure du cycle.

Dans le cas où les deux polarisations ont des niveaux proches (cas d'un satellite en polarisation linéaire reçu en circulaire par exemple), la polarisation utilisée peut potentiellement varier fréquemment. Ce cas de figure étant néfaste aux performances de la poursuite, la polarisation droite est choisie initialement arbitrairement et une hystérésis est implémentée afin de ne décider d'un changement de polarisation que suite à une variation de niveau considérée comme significative, 5 dB par exemple.

En outre, l'invention a été décrite en considérant le cas où l'orbite de mission est une orbite GEO et où l'orbite initiale est une orbite GTO. L'invention est néanmoins applicable à d'autres types d'orbite de mission et à d'autres types d'orbite initiale, dès lors que le satellite est transféré d'une orbite initiale vers une orbite de mission, distincte de l'orbite initiale. Notamment, l'orbite de mission peut être tout type d'orbite géosynchrone. L'orbite initiale peut être tout type d'orbite GTO avec ou sans inclinaison, ou encore une orbite super-synchrone, une orbite sub-synchrone, etc.

En outre, il est à noter que, dans son principe, l'invention décrite ci-avant est également applicable pour estimer la direction d'un satellite 20 à poste sur son orbite de mission, en particulier pour un satellite à poste sur une orbite géosynchrone telle qu'une orbite GEO.

Il est également à noter que, dans son principe, l'invention n'est pas limitée à une bande de fréquences particulière et peut par exemple fonctionner dans la bande de fréquences C, Ku, Ka, etc. En outre, dans des modes particuliers de réalisation, l'invention peut fonctionner dans plusieurs bandes de fréquences, en considérant par exemple une antenne de mesure avec un réflecteur et plusieurs sources adaptées à recevoir des signaux cibles émis par des satellites différents dans des bandes de fréquences respectives différentes, par exemple dans les bandes de fréquences C, Ku et Ka (qui correspondent aux bandes de fréquences généralement utilisées pour l'émission de signaux de télémesure par des satellites). Les signaux cibles reçus par ces différentes sources de l'antenne de mesure sont par exemple tous ramenés sur une même fréquence intermédiaire, par exemple en bande L, pour être traités selon l'invention. Une telle configuration permet de réduire le nombre d'éléments du système à installer tels que le nombre de sites, de chaînes de traitement et de réflecteurs. Ainsi, le déploiement de la solution selon l'invention est plus rapide et moins couteux.

La description ci-avant illustre clairement que par ses différentes caractéristiques et leurs avantages, la présente invention atteint les objectifs qu'elle s'était fixés. En particulier, le système 10 d'estimation selon l'invention permet d'estimer à moindre coût la direction d'un satellite 20 en phase de transfert depuis une orbite GTO vers l'orbite GEO.

## Revendications

1. Procédé (50) d'estimation d'une direction d'un satellite (20) au cours d'une phase de transfert dudit satellite depuis une orbite terrestre, dite « orbite initiale », vers une autre orbite terrestre, dite « orbite de mission », ladite direction dudit satellite étant estimée par rapport à une antenne (30) de mesure en exécutant une pluralité d'étapes (52) de mesure de puissance de réception, par ladite antenne de mesure, d'un signal cible émis par ledit satellite (20), pour différentes directions de pointage de ladite antenne de mesure, la direction estimée dudit satellite correspondant à une direction de pointage permettant de maximiser la mesure de puissance, **caractérisé en ce que,** le signal cible comportant une composante sensiblement sinusoïdale, dite « composante mono-fréquence », chaque étape (52) de mesure de puissance comporte une transposition dans le domaine fréquentiel d'un signal numérique, obtenu à partir d'un signal fourni par l'antenne (30) de mesure, de sorte à obtenir un spectre fréquentiel dudit signal numérique sur une bande fréquentielle prédéterminée comportant ladite composante mono-fréquence, dite « bande de mesure », et la mesure de puissance pour la direction de pointage considérée est déterminée à partir d'une valeur maximale du spectre fréquentiel sur ladite bande de mesure considérée, et **en ce que** ledit procédé comporte une phase (60) de recherche, une phase (70) de confirmation et, après la phase de confirmation, une phase (80) d'actualisation de la direction estimée du satellite (20) :

- la phase (60) de recherche comporte une étape (52) de mesure de puissance de réception pour une direction de pointage à l'intérieur d'un premier cône de balayage prédéterminé autour d'une direction théorique du satellite, et une étape (53) d'évaluation d'un critère prédéterminé de détection en fonction de la mesure de puissance obtenue pour la direction de pointage considérée, lesdites étapes de (52) mesure de puissance et (53) d'évaluation étant répétées pour une autre direction de pointage à l'intérieur du premier cône de balayage tant que le critère de détection n'est pas vérifié,

- la phase (70) de confirmation, exécutée lorsque le critère de détection est vérifié pour une mesure de puissance obtenue pour une direction de pointage, dite « direction de détection », comporte plusieurs étapes (52) de mesure de puissance exécutées pour des directions de pointage respectives différentes à l'intérieur d'un second cône de balayage autour de la direction de détection, la direction estimée du satellite (20) correspondant à la direction de pointage permettant de maximiser la mesure de puissance au cours de ladite phase (70) de confirmation,

- la phase (80) d'actualisation comporte une pluralité d'étapes (52) de mesure de puissance associées respectivement à différentes directions de pointage autour de la direction estimée obtenue au cours de la phase (70) de confirmation, et une étape (55) d'actualisation de ladite direction estimée en fonction desdites mesures de puissance et d'un modèle prédéterminé du diagramme de rayonnement de l'antenne (30) de mesure.

2. Procédé (50) selon la revendication 1, dans lequel la phase (80) d'actualisation est répétée au cours du temps, les mesures de puissance effectuées au cours d'une phase (80) d'actualisation étant effectuées pour des directions de pointage autour de la direction estimée obtenue au cours de la phase (80) d'actualisation précédente.

3. Procédé (50) selon l'une des revendications 1 à 2, dans lequel la bande de mesure considérée au cours d'une étape (52) de mesure de puissance de la phase (70) de confirmation est de largeur différente de celle de la bande de mesure considérée au cours d'une étape (52) de mesure de puissance de la phase (80) d'actualisation.

4. Procédé (50) selon l'une des revendications 1 à 3, dans lequel, au cours de la phase (60) de recherche, les différentes directions de pointage considérées à l'intérieur du premier cône de balayage sont des directions de pointage prédéfinies réparties suivant une spirale centrée sur la direction théorique dudit satellite, lesdites directions de pointage considérées étant balayées successivement en suivant ladite spirale en partant de ladite direction théorique dudit satellite.

5. Procédé (50) selon l'une des revendications 1 à 4, dans lequel, au cours de la phase (70) de confirmation, les différentes directions de pointage considérées à l'intérieur du second cône de balayage sont des directions de pointage prédéfinies réparties suivant une spirale centrée sur la direction de détection dudit satellite, lesdites directions de pointage considérées étant balayées successivement en suivant ladite spirale en partant de ladite direction de détection dudit satellite.

6. Procédé (50) selon l'une des revendications 1 à 5, dans lequel :

- au cours de la phase (60) de recherche, la direction théorique du satellite est actualisée entre deux étapes (52) successives de mesure de puissance, en fonction d'une trajectoire théorique dudit satellite (20), et/ou
- au cours de la phase (70) de confirmation, la direction de détection du satellite est actualisée entre deux étapes (52) successives de mesure de puissance, en fonction d'une trajectoire théorique dudit satellite (20).

7. Procédé (50) selon l'une des revendications 1 à 6, dans lequel le premier cône de balayage et le second cône de balayage sont de largeurs angulaires respectives supérieures à la largeur angulaire d'un lobe principal d'un diagramme de rayonnement de l'antenne (30) de mesure.

8. Produit programme d'ordinateur **caractérisé en ce qu'**il comporte un ensemble d'instructions de code de programme qui, lorsqu'elles sont exécutées par un processeur d'un système (10) selon l'une des revendication 9 à 15, configurent ledit système (10) pour mettre en œuvre un procédé (50) d'estimation de la direction d'un satellite (20) selon l'une des revendications 1 à 7.

9. Système (10) d'estimation d'une direction d'un satellite (20) au cours d'une phase de transfert dudit satellite depuis une orbite terrestre, dite « orbite initiale », vers une autre orbite terrestre, dite « orbite de mission », ledit système (10) comportant :

- une antenne (30) de mesure d'une puissance de réception d'un signal cible émis par le satellite (20),

- des moyens de pointage adaptés à modifier une direction de pointage de ladite antenne de mesure,
- un dispositif (40) de traitement adapté à commander lesdits moyens de pointage et à mesurer une puissance de réception, par l'antenne (30) de mesure, d'un signal cible émis par le satellite (20), ledit dispositif de traitement étant configuré pour estimer la direction dudit satellite (20) en maximisant la mesure de puissance de réception dudit signal cible,

**caractérisé en ce que,** le signal cible comportant une composante sensiblement sinusoïdale, dite « composante mono-fréquence », le dispositif (40) de traitement est configuré pour effectuer une transposition dans le domaine fréquentiel d'un signal numérique, obtenu à partir d'un signal fourni par l'antenne (30) de mesure, de sorte à obtenir un spectre fréquentiel dudit signal numérique sur une bande fréquentielle prédéterminée comportant ladite composante mono-fréquence, dite « bande de mesure », et pour déterminer la mesure de puissance pour la direction de pointage considérée à partir d'une valeur maximale dudit spectre fréquentiel sur ladite bande de mesure considérée, ledit dispositif (40) de traitement étant configuré pour exécuter une phase (60) de recherche, une phase (70) de confirmation et, après la phase de confirmation, une phase (80) d'actualisation de la direction estimée du satellite (20) :

- la phase (60) de recherche comporte une mesure de puissance de réception pour une direction de pointage à l'intérieur d'un premier cône de balayage prédéterminé autour d'une direction théorique du satellite, et une évaluation d'un critère prédéterminé de détection en fonction de la mesure de puissance obtenue pour la direction de pointage considérée, ladite mesure de puissance et évaluation étant répétées pour une autre direction de pointage à l'intérieur du premier cône de balayage tant que le critère de détection n'est pas vérifié,
- la phase (70) de confirmation, exécutée lorsque le critère de détection est vérifié pour une mesure de puissance obtenue pour une direction de pointage, dite « direction de détection », comporte plusieurs mesures de puissance effectuées pour des directions de pointage respectives différentes à l'intérieur d'un second cône de balayage autour de la direction de détection, la direction estimée du satellite (20) correspondant à la direction de pointage permettant de maximiser la mesure de puissance au cours de ladite phase (70) de confirmation,
- la phase (80) d'actualisation comporte une pluralité de mesures de puissance associées respectivement à différentes directions de pointage autour de la direction estimée obtenue au cours de la phase (70) de confirmation, et une actualisation de ladite direction estimée en fonction desdites mesures de puissance et d'un modèle prédéterminé du diagramme de rayonnement de l'antenne (30) de mesure.

10. Système (10) selon la revendication 9, dans lequel la phase (80) d'actualisation est répétée au cours du temps, les mesures de puissance effectuées au cours d'une phase (80) d'actualisation étant effectuées pour des directions de pointage autour de la direction estimée obtenue au cours de la phase (80) d'actualisation précédente.

11. Système (10) selon l'une des revendications 9 à 10, dans lequel la bande de mesure considérée au cours d'une mesure de puissance de la phase (70) de confirmation est de largeur différente de celle de la bande de mesure considérée au cours d'une mesure de puissance de la phase (80) d'actualisation.

12. Système (10) selon l'une des revendications 9 à 11, dans lequel, au cours de la phase (60) de recherche, les différentes directions de pointage considérées à l'intérieur du premier cône de balayage sont des directions de pointage prédéfinies réparties suivant une spirale centrée sur la direction théorique dudit satellite, lesdites directions de pointage considérées étant balayées successivement en suivant ladite spirale en partant de ladite direction théorique dudit satellite.

13. Système (10) selon l'une des revendications 9 à 12, dans lequel, au cours de la phase (70) de confirmation, les différentes directions de pointage considérées à l'intérieur du second cône de balayage sont des directions de pointage prédéfinies réparties suivant une spirale centrée sur la direction de détection dudit satellite, lesdites directions de pointage considérées étant balayées successivement en suivant ladite spirale en partant de ladite direction de détection dudit satellite.

14. Système (10) selon l'une des revendications 9 à 13, dans lequel :

- au cours de la phase (60) de recherche, la direction théorique du satellite est actualisée entre deux mesures successives de puissance, en fonction d'une trajectoire théorique dudit satellite (20), et/ou
- au cours de la phase (70) de confirmation, la direction de détection du satellite est actualisée entre deux mesures successives de puissance, en fonction d'une trajectoire théorique dudit satellite (20).

**15.** Système (10) selon l'une des revendications 9 à 14, dans lequel le premier cône de balayage et le second cône de balayage sont de largeurs angulaires respectives supérieures à la largeur angulaire d'un lobe principal d'un diagramme de rayonnement de l'antenne (30) de mesure.

**Patentansprüche**

**1.** Verfahren (50) zur Schätzung einer Richtung eines Satelliten (20) im Laufe einer Transferphase des Satelliten aus einer terrestrischen Umlaufbahn, "erste Umlaufbahn" genannt, in eine andere terrestrische Umlaufbahn, "Missionsumlaufbahn" genannt, wobei die Richtung des Satelliten in Bezug auf eine Messantenne (30) durch Ausführen einer Vielzahl von Messschritten (52) einer Empfangsleistung, durch die Messantenne, eines Zielsignals, das von dem Satelliten (20) gesendet wird, für verschiedene Ausrichtungsrichtungen der Messantenne geschätzt wird, wobei die geschätzte Richtung des Satelliten einer Ausrichtungsrichtung entspricht, die es ermöglicht, die Leistungsmessung zu maximieren, **dadurch gekennzeichnet, dass** das Zielsignal eine im Wesentlichen sinusförmige Komponente, "Monofrequenzkomponente" genannt, beinhaltet, wobei jeder Schritt (52) zur Leistungsmessung eine Umsetzung in den Frequenzbereich eines digitalen Signals beinhaltet, das aus einem durch die Messantenne (30) bereitgestellten Signal erhalten wird, um ein Frequenzspektrum des digitalen Signals auf einem vorbestimmten Frequenzband, "Messband" genannt, zu erhalten, das die Monofrequenzkomponente beinhaltet, und die Leistungsmessung für die betrachtete Ausrichtungsrichtung aus einem maximalen Wert des Frequenzspektrums auf dem betrachteten Messband bestimmt wird, und dadurch, dass das Verfahren eine Suchphase (60), eine Bestätigungsphase (70) und, nach der Bestätigungsphase, eine Aktualisierungsphase (80) der geschätzten Richtung des Satelliten (20) beinhaltet:

- die Suchphase (60) beinhaltet einen Messschritt (52) einer Empfangsleistung für eine Ausrichtungsrichtung im Inneren eines ersten vorbestimmten Abtastkegels um eine theoretische Richtung des Satelliten herum, und einen Bewertungsschritt (53) eines vorbestimmten Detektionskriteriums in Abhängigkeit von der Leistungsmessung, die für die betrachtete Ausrichtungsrichtung erhalten wird, wobei die Schritte zur Leistungsmessung (52) und Bewertung (53) für eine andere Ausrichtungsrichtung im Inneren des ersten Abtastkegels wiederholt werden, solange das Detektionskriterium nicht überprüft ist,
- die Bestätigungsphase (70), die ausgeführt wird, wenn das Detektionskriterium für eine Leistungsmessung überprüft ist, die für eine Ausrichtungsrichtung, "Detektionsrichtung" genannt, erhalten wird, beinhaltet mehrere Schritte (52) zur Leistungsmessung, die für jeweilige unterschiedliche Ausrichtungsrichtungen im Inneren eines zweiten Abtastkegels um die Detektionsrichtung herum ausgeführt werden, wobei die geschätzte Richtung des Satelliten (20) der Ausrichtungsrichtung entspricht, die es ermöglicht, die Leistungsmessung im Laufe der Bestätigungsphase (70) zu maximieren,
- die Aktualisierungsphase (80) beinhaltet eine Vielzahl von Schritten (52) zur Leistungsmessung, die jeweils unterschiedlichen Ausrichtungsrichtungen um die geschätzte Richtung herum zugeordnet sind, die im Laufe der Bestätigungsphase (70) erhalten wird, und einen Schritt (55) zur Aktualisierung der geschätzten Richtung in Abhängigkeit von den Leistungsmessungen und eines vorbestimmten Modells des Strahlungsdiagramms der Messantenne (30).

**2.** Verfahren (50) nach Anspruch 1, wobei die Aktualisierungsphase (80) im Laufe der Zeit wiederholt wird, wobei die im Laufe einer Aktualisierungsphase (80) durchgeführten Leistungsmessungen für Ausrichtungsrichtungen um die geschätzte Richtung herum ausgeführt werden, die im Laufe der vorstehenden Aktualisierungsphase (80) erhalten wird.

**3.** Verfahren (50) nach einem der Ansprüche 1 bis 2, wobei das betrachtete Messband im Laufe eines Schrittes (52) zur Leistungsmessung der Bestätigungsphase (70) von unterschiedlicher Breite zu jener des betrachteten Messbandes im Laufe eines Schrittes (52) zur Leistungsmessung der Aktualisierungsphase (80) ist.

**4.** Verfahren (50) nach einem der Ansprüche 1 bis 3, wobei die verschiedenen betrachteten Ausrichtungsrichtungen im Inneren des ersten Abtastkegels im Laufe der Suchphase (60) vordefinierte Ausrichtungsrichtungen sind, die entlang einer zentrierten Spirale auf der theoretischen Richtung des Satelliten verteilt sind, wobei die betrachteten Ausrichtungsrichtungen nacheinander durch Folgen der Spirale ausgehend von der theoretischen Richtung des Satelliten abgetastet werden.

**5.** Verfahren (50) nach einem der Ansprüche 1 bis 4, wobei die verschiedenen betrachteten Ausrichtungsrichtungen im Inneren des zweiten Abtastkegels im Laufe der Bestätigungsphase (70) vordefinierte Ausrichtungsrichtungen sind, die entlang einer zentrierten Spirale auf der Detektionsrichtung des Satelliten verteilt sind, wobei die betrachteten Ausrichtungsrichtungen nacheinander durch Folgen der Spirale ausgehend von der Detektionsrichtung des Satelliten abgetastet werden.

6. Verfahren (50) nach einem der Ansprüche 1 bis 5, wobei:

- im Laufe der Suchphase (60) die theoretische Richtung des Satelliten zwischen zwei aufeinanderfolgenden Schritten (52) zur Leistungsmessung in Abhängigkeit von einer theoretischen Flugbahn des Satelliten (20) aktualisiert wird, und/oder
- im Laufe des Bestätigungsschrittes (70) die Detektionsrichtung des Satelliten zwischen zwei aufeinanderfolgenden Schritten (52) zur Leistungsmessung in Abhängigkeit von einer theoretischen Flugbahn des Satelliten (20) aktualisiert wird.

7. Verfahren (50) nach einem der Ansprüche 1 bis 6, wobei der erste Abtastkegel und der zweite Abtastkegel von jeweiligen Winkelbreiten sind, die größer als die Winkelbreite einer Hauptkeule eines Strahlungsdiagramms der Messantenne (30) sind.

8. Computerprogrammprodukt, **dadurch gekennzeichnet, dass** es eine Reihe von Programmcodeanweisungen beinhaltet, die, wenn sie von einem Prozessor eines Systems (10) nach einem der Ansprüche 9 bis 15 ausgeführt werden, das System (10) konfigurieren, um ein Verfahren (50) zur Schätzung der Richtung eines Satelliten (20) nach einem der Ansprüche 1 bis 7 auszuführen.

9. System (10) zur Schätzung einer Richtung eines Satelliten (20) im Laufe einer Transferphase des Satelliten aus einer terrestrischen Umlaufbahn, "erste Umlaufbahn" genannt, in eine andere terrestrische Umlaufbahn, "Missionsumlaufbahn" genannt, wobei das System (10) Folgendes beinhaltet:

- eine Messantenne (30) einer Empfangsleistung eines Zielsignals, das von dem Satelliten (20) gesendet wird,
- Ausrichtungsmittel, die angepasst sind, um eine Ausrichtungsrichtung der Messantenne zu ändern,
- eine Bearbeitungsvorrichtung (40), die angepasst ist, um die Ausrichtungsmittel zu steuern, und eine Empfangsleistung durch die Messantenne (30) eines Zielsignals zu messen, das von dem Satelliten (20) gesendet wird, wobei die Bearbeitungsvorrichtung konfiguriert ist, um die Richtung des Satelliten (20) zu schätzen, indem die Messung einer Empfangsleistung des Zielsignals maximiert wird,

**dadurch gekennzeichnet, dass**, da das Zielsignal eine im Wesentlichen sinusförmige Komponente, "Monofrequenzkomponente" genannt, beinhaltet, die Bearbeitungsvorrichtung (40) konfiguriert ist, um eine Umsetzung in den Frequenzbereich eines digitalen Signals durchzuführen, das aus einem durch die Messantenne (30) bereitgestellten Signal erhalten wird, um ein Frequenzspektrum des digitalen Signals auf einem vorbestimmten Frequenzband, "Messband" genannt, zu erhalten, das die Monofrequenzkomponente beinhaltet, und um die Leistungsmessung für die betrachtete Ausrichtungsrichtung aus einem maximalen Wert des Frequenzspektrums auf dem betrachteten Messband zu bestimmen, wobei die Bearbeitungsvorrichtung (40) konfiguriert ist, um eine Suchphase (60), eine Bestätigungsphase (70) und, nach der Bestätigungsphase, eine Aktualisierungsphase (80) der geschätzten Richtung des Satelliten (20) durchzuführen:

- die Suchphase (60) beinhaltet eine Messung einer Empfangsleistung für eine Ausrichtungsrichtung im Inneren eines ersten vorbestimmten Abtastkegels um eine theoretische Richtung des Satelliten herum, und eine Bewertung eines vorbestimmten Detektionskriteriums in Abhängigkeit von der Leistungsmessung, die für die betrachtete Ausrichtungsrichtung erhalten wird, wobei die Leistungsmessung und Bewertung für eine andere Ausrichtungsrichtung im Inneren des ersten Abtastkegels wiederholt werden, solange das Detektionskriterium nicht überprüft ist,
- die Bestätigungsphase (70), die ausgeführt wird, wenn das Detektionskriterium für eine Leistungsmessung überprüft ist, die für eine Ausrichtungsrichtung, "Detektionsrichtung" genannt, erhalten wird, beinhaltet mehrere Leistungsmessungen, die für jeweilige unterschiedliche Ausrichtungsrichtungen im Inneren eines zweiten Abtastkegels um die Detektionsrichtung herum ausgeführt werden, wobei die geschätzte Richtung des Satelliten (20) der Ausrichtungsrichtung entspricht, die es ermöglicht, die Leistungsmessung im Laufe der Bestätigungsphase (70) zu maximieren,
- die Aktualisierungsphase (80) beinhaltet eine Vielzahl von Leistungsmessungen, die jeweils unterschiedlichen Ausrichtungsrichtungen um die geschätzte Richtung herum zugeordnet sind, die im Laufe der Bestätigungsphase (70) erhalten wird, und eine Aktualisierung der geschätzten Richtung in Abhängigkeit von den Leistungsmessungen und von einem vorbestimmten Modell des Strahlungsdiagramms der Messantenne (30).

10. System (10) nach Anspruch 9, wobei die Aktualisierungsphase (80) im Laufe der Zeit wiederholt wird, wobei die im Laufe einer Aktualisierungsphase (80) durchgeführten Leistungsmessungen für Ausrichtungsrichtungen um die geschätzte Richtung herum ausgeführt werden, die im Laufe der vorstehenden Aktualisierungsphase (80) erhalten wird.

11. System (10) nach einem der Ansprüche 9 bis 10, wobei das betrachtete Messband im Laufe einer Leistungsmessung der Bestätigungsphase (70) von unterschiedlicher Breite zu jener des betrachteten Messbandes im Laufe einer Leistungsmessung der Aktualisierungsphase (80) ist.

12. System (10) nach einem der Ansprüche 9 bis 11, wobei die verschiedenen betrachteten Ausrichtungsrichtungen im Inneren des ersten Abtastkegels im Laufe der Suchphase (60) vordefinierte Ausrichtungsrichtungen sind, die entlang einer zentrierten Spirale auf der theoretischen Richtung des Satelliten verteilt sind, wobei die betrachteten Ausrichtungsrichtungen nacheinander durch Folgen der Spirale ausgehend von der theoretischen Richtung des Satelliten abgetastet werden.

13. System (10) nach einem der Ansprüche 9 bis 12, wobei die verschiedenen betrachteten Ausrichtungsrichtungen im Inneren des zweiten Abtastkegels im Laufe der Bestätigungsphase (70) vordefinierte Ausrichtungsrichtungen sind, die entlang einer zentrierten Spirale auf der Detektionsrichtung des Satelliten verteilt sind, wobei die betrachteten Ausrichtungsrichtungen nacheinander durch Folgen der Spirale ausgehend von der Detektionsrichtung des Satelliten abgetastet werden.

14. System (10) nach einem der Ansprüche 9 bis 13, wobei:

- im Laufe der Suchphase (60) die theoretische Richtung des Satelliten zwischen zwei aufeinanderfolgenden Leistungsmessungen in Abhängigkeit von einer theoretischen Flugbahn des Satelliten (20) aktualisiert wird, und/oder
- im Laufe des Bestätigungsschrittes (70) die Detektionsrichtung des Satelliten zwischen zwei aufeinanderfolgenden Leistungsmessungen in Abhängigkeit von einer theoretischen Flugbahn des Satelliten (20) aktualisiert wird.

15. System (10) nach einem der Ansprüche 9 bis 14, wobei der erste Abtastkegel und der zweite Abtastkegel von jeweiligen Winkelbreiten sind, die größer als die Winkelbreite einer Hauptkeule eines Strahlungsdiagramms der Messantenne (30) sind.

## Claims

1. Method (50) for estimating the direction of a satellite (20) during a transfer phase of said satellite from an Earth orbit, referred to as "initial orbit", to another Earth orbit, referred to as "mission orbit", said direction of said satellite being estimated relative to a measurement antenna (30) by executing a plurality of steps (52) for measuring the reception power, by said measurement antenna, of a target signal emitted by said satellite (20), for different pointing directions of said measurement antenna, the estimated direction of said satellite corresponding to a pointing direction maximizing the power measurement, **characterized in that,** the target signal comprising a substantially sinusoidal component, referred to as "single-frequency component", each power measurement step (52) comprises a transposition in the frequency domain of a digital signal, obtained from a signal supplied by the measurement antenna (30), in such a way as to obtain a frequency spectrum of said digital signal over a predetermined frequency band comprising said single-frequency component, referred to as "measurement band", and the power measurement for the pointing direction being considered is determined based on a maximum value of the frequency spectrum over said measurement band being considered, and **in that** said method comprises a search phase (60), a confirmation phase (70) and, after the confirmation phase, a phase (80) of updating the estimated direction of the satellite (20):

- the search phase (60) comprises a step (52) for measuring the reception power for a pointing direction inside a first predetermined scanning cone around a theoretical direction of the satellite, and a step (53) of evaluating a predetermined detection criterion according to the power measurement obtained for the pointing direction being considered, said steps of (52) for measuring power and (53) for evaluating being repeated for another pointing direction inside the first scanning cone as long as the detection criterion is not verified,

- the confirmation phase (70), executed when the detection criterion is verified for a power measurement obtained for a pointing direction, referred to as "detection direction", comprises several steps (52) for measuring power executed for different respective pointing directions inside a second scanning cone around the detection direction, the estimated direction of the satellite (20) corresponding to the pointing direction maximizing the power measurement during said confirmation phase (70),

- the phase (80) of updating comprises a plurality of steps (52) of measuring power associated respectively with different pointing directions around the estimated direction obtained during the confirmation phase (70), and a step (55) of updating said estimated direction according to said power measurements and to a predetermined model of the radiation diagram of the measurement antenna (30).

2. Method (50) according to claim 1, wherein the phase (80) of updating is repeated over time, the power measurements taken during a phase (80) of updating being taken for pointing directions around the estimated direction obtained during the preceding phase (80) of updating.

3. Method (50) according to one of claims 1 to 2, wherein the measurement band being considered during a step (52) for measuring the power of the confirmation phase (70) is of a width different from that of the measurement band being considered during a step (52) for measuring the power of the phase (80) of updating.

4. Method (50) according to one of claims 1 to 3, wherein, during the search phase (60), the different pointing directions being considered inside the first scanning cone are predefined pointing directions distributed along a spiral centered on the theoretical direction of said satellite, said pointing directions being considered being scanned successively by following said spiral from said theoretical direction of said satellite.

5. Method (50) according to one of claims 1 to 4, wherein, during the confirmation phase (70), the different pointing directions being considered inside the second scanning cone are predefined pointing directions distributed along a spiral centered on the detection direction of said satellite, said pointing directions being considered being scanned successively by following said spiral from said detection direction of said satellite.

6. Method (50) according to one of claims 1 to 5, wherein:

   - during the search phase (60), the theoretical direction of the satellite is updated between two successive steps (52) for measuring power, according to a theoretical trajectory of said satellite (20), and/or
   - during the confirmation phase (70), the detection direction of the satellite is updated between two successive steps (52) for measuring power, according to a theoretical trajectory of said satellite (20).

7. Method (50) according to one of claims 1 to 6, wherein the first scanning cone and the second scanning cone are of respective angular widths greater than the angular width of a main lobe of a radiation diagram of the measurement antenna (30).

8. Computer program product **characterized in that** it comprises a set of program code instructions that, when they are executed by a processor of a system (10) according to one of claims 9 to 15, configure said system (10) in order to implement a method (50) for estimating the direction of a satellite (20) according to one of claims 1 to 7.

9. System (10) for estimating a direction of a satellite (20) during a transfer phase of said satellite from an Earth orbit, referred to as "initial orbit", to another Earth orbit, referred to as "mission orbit", said system (10) comprising:

   - a measurement antenna (30) of a reception power of a target signal emitted by the satellite (20),
   - means for pointing suitable for modifying a pointing direction of said measurement antenna,
   - a device (40) for processing suitable for controlling said pointing means and for measuring a reception power, by the measurement antenna (30), of a target signal emitted by the satellite (20), said device for processing being configured to estimate the direction of said satellite (20) by maximizing the reception power measurement of said target signal,

   **characterized in that,** as the target signal comprises a substantially sinusoidal component, referred to as "single-frequency component", the device (40) for processing is configured to carry out a transposition in the frequency domain of a digital signal, obtained from a signal supplied by the measurement antenna (30), in such a way as to obtain a frequency spectrum of said digital signal over a predetermined frequency band comprising said single-frequency component, referred to as "measurement band", and to determine the power measurement for the pointing direction being considered based on a maximum value of said frequency spectrum over said measurement band being considered, the device (40) for processing being configured to execute a search phase (60), a confirmation phase (70) and, after the confirmation phase, a phase (80) of updating the estimated direction of the satellite (20):

- the search phase (60) comprises a measurement of the reception power for a pointing direction inside a first predetermined scanning cone around a theoretical direction of the satellite, and an evaluation of a predetermined detection criterion according to the power measurement obtained for the pointing direction being considered, said power measurement and evaluation being repeated for another pointing direction inside the first scanning cone as long as the detection criterion is not verified,

- the confirmation phase (70), executed when the detection criterion is verified for a power measurement obtained for a pointing direction, referred to as "detection direction", comprises several power measurements executed for different respective pointing directions inside a second scanning cone around the detection direction, the estimated direction of the satellite (20) corresponding to the pointing direction maximizing the power measurement during said confirmation phase (70),

- the phase (80) of updating comprises a plurality of power measurements associated respectively with different pointing directions around the estimated direction obtained during the confirmation phase (70), and an updating of said estimated direction according to said power measurements and to a predetermined model of the radiation diagram of the measurement antenna (30).

10. System (10) according to claim 9, wherein the phase (80) of updating is repeated over time, the power measurements taken during a phase (80) of updating being taken for pointing directions around the estimated direction obtained during the preceding phase (80) of updating.

11. System (10) according to one of claims 9 to 10, wherein the measurement band being considered during a power measurement of the confirmation phase (70) is of a width different from that of the measurement band being considered during a power measurement of the phase (80) of updating.

12. System (10) according to one of claims 9 to 11, wherein, during the search phase (60), the different pointing directions being considered inside the first scanning cone are predefined pointing directions distributed along a spiral centered on the theoretical direction of said satellite, said pointing directions being considered being scanned successively by following said spiral from said theoretical direction of said satellite.

13. System (10) according to one of claims 9 to 12, wherein, during the confirmation phase (70), the different pointing directions being considered inside the second scanning cone are predefined pointing directions distributed along a spiral centered on the detection direction of said satellite, said pointing directions being considered being scanned successively by following said spiral from said detection direction of said satellite.

14. System (10) according to one of claims 9 to 13, wherein:

- during the search phase (60), the theoretical direction of the satellite is updated between two successive power measurements, according to a theoretical trajectory of said satellite (20), and/or
- during the confirmation phase (70), the detection direction of the satellite is updated between two successive power measurements, according to a theoretical trajectory of said satellite (20).

15. System (10) according to one of claims 9 to 14, wherein the first scanning cone and the second scanning cone are of respective angular widths greater than the angular width of a main lobe of a radiation diagram of the measurement antenna (30).

**Fig. 1**

**Fig. 2**

**Fig. 3**

**Fig. 4**

**Fig. 5**

**Fig. 6**

a) b)

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- PRECISE ORBIT DETERMINATION DURING TRANSFER ORBIT PHASE OF GSAT-1. **SUBRAMANIAN B et al.** JOURNAL OF SPACECRAFT AND ROCKETS. AMERICAN INSTITUTE OF AERONAUTICS AND ASTRONAUTICS

- **LUDWIG VAN DER HORST et al.** Step Tracking Unit for Antenna Control. *TECHNISCHE MITTEILUNGEN KRUPP*